# DEMANDE DE BREVET EUROPEEN

(11) **EP 1 424 831 A1**
(43) Date de publication de la demande: **02.06.2004**
(21) Numéro de dépôt: 03292658.6
(22) Date de dépôt: 24.10.2003
(51) Int. Cl.: H04L 29/06, H04L 29/12

(54) **Dispositif de conversion de champs d'entêtes de trames, pour un réseau de communications**

(30) Priorité: 28.11.2002 FR 0214937
(71) Demandeur: ALCATEL, 75008 Paris (FR)
(72) Inventeur: Zein Al-Abedeen, Tarif, 31320 Castanet (FR); Buret, Isabelle, 31830 Plaisance du Touch (FR); Leconte, Katia, 31000 Toulouse (FR)
(74) Mandataire: Chaffraix, Sylvain

(57) **Abrégé**

Un dispositif (Di) est dédié au traitement de trames de données encapsulées dans un entête de protocole de transmission de niveau deux, au sein d'un réseau de communications comportant une multiplicité de stations de communications (STi) comprenant chacune un module d'acheminement de trames (Ai) couplé à un module de communications de trames (Ci). Le dispositif (Di) comprend, d'une part, une mémoire (Mi) pouvant stocker des adresses destinataire et/ou des adresses source en correspondance d'adresses destinataire réduites et/ou d'adresses source réduites, et d'autre part, un module de traitement (Pi) capable, lorsqu'un module d'acheminement (Ai) reçoit une trame, d'extraire de l'entête de cette trame l'adresse destinataire et/ou l'adresse source afin de déterminer dans la mémoire (Mi) l'adresse destinataire réduite et/ou l'adresse source réduite correspondante(s), puis de remplacer dans l'entête chaque adresse précédemment extraite par l'adresse réduite correspondante venant d'être déterminée, et de communiquer au module de communications (Ci) la trame comportant chaque adresse réduite.

## Description

L'invention concerne le domaine des communications entre terminaux d'un réseau de communications, et plus particulièrement le contrôle de l'échange de trames encapsulées entre terminaux.

On entend ici par « terminal », tout équipement de réseau, et notamment les équipements d'utilisateurs, tels que les ordinateurs fixes ou portables ou les téléphones portables, les routeurs ou les serveurs, mais également les stations de communications telles que les terminaux de satellites.

Certains réseaux de communications, comme par exemple les réseaux de communications par satellite, utilisent des stations de communications équipées de modules de communications qui leur permettent de s'échanger des trames de données encapsulées. Plus précisément, dans certains réseaux de ce type, les données utiles (ou « payload ») qui doivent être échangées selon un premier protocole de transmission, comme par exemple un protocole IP dit « de niveau trois » (dans le modèle en couches OSI), sont encapsulées dans une trame de niveau deux (dans le modèle en couches OSI). Une trame comporte donc un entête (ou « overhead »), défini par un second protocole de transmission de niveau deux, comme par exemple Ethernet, et des données utiles (ou payload).

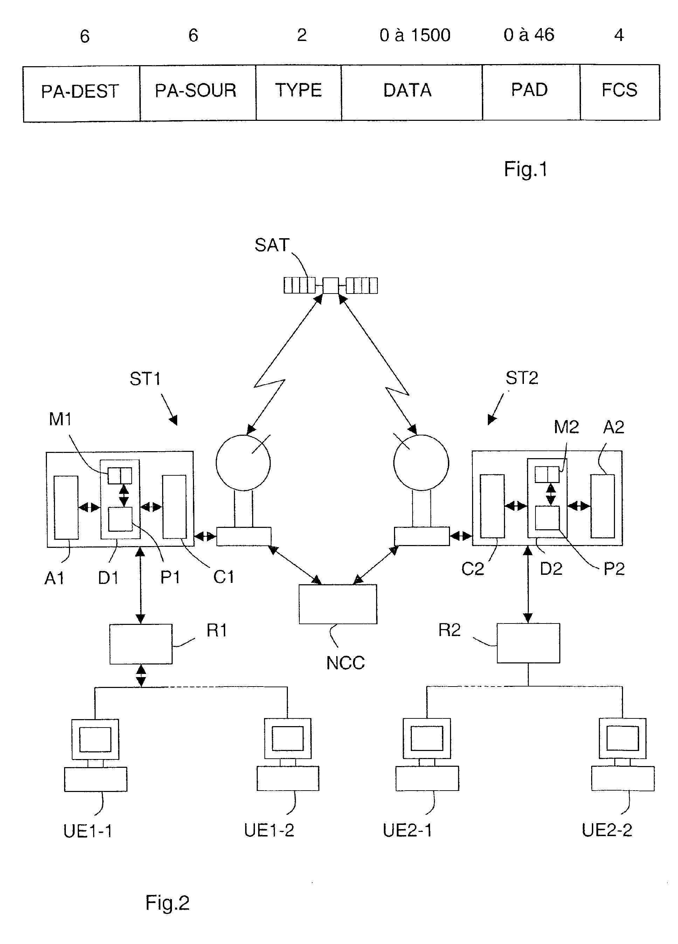

Dans le cas non limitatif du protocole Ethernet défini par la norme IEEE 802.3, chaque trame ethernet, comme illustré sur la figure 1, est constituée d'un premier champ de 6 octets contenant l'adresse physique ethernet du terminal destinataire, d'un deuxième champ de 6 octets contenant l'adresse physique ethernet du terminal source, d'un troisième champ de 2 octets contenant le type des données utiles (comme par exemple un datagramme IP, une requête ARP, un paquet IPX), d'un quatrième champ de 0 à 1500 octets contenant les données utiles, d'un cinquième champ de 0 à 46 octets de remplissage ou bourrage (ou « padding »), et un sixième champ de 4 octets contenant un code de détection d'erreur (ou FCS pour « Frame Check Summ »).

Les premier, second, troisième, cinquième et sixième champs constituent l'entête de la trame ethernet. Cet entête est donc constitué de 18 à 64 octets selon la taille du padding, et son importance relative au sein d'une trame peut être grande, voire très grande, par rapport à celle des données utiles. C'est par exemple le cas des paquets de données utiles de 28 octets générés par les applications de type « voix sous IP » (ou VoIP), ou des accusés de réception (ou ACK TCP) de 40 octets générés par le protocole TCP.

Pour tenter d'améliorer cette situation dans certains cas particuliers, il a été proposé par l'IETF, notamment dans le cadre de l'encapsulation multi-protocoles dans l'ATM, et plus précisément dans l'AAL5 (RFC 1483), deux solutions. La première solution consiste à supprimer le sixième champ FCS de contrôle d'erreur qui, dans le cas d'AAL5, est redondant avec son mécanisme de contrôle d'erreur. La deuxième solution consiste à supprimer le cinquième champ de padding puisque l'ATM n'impose pas une taille minimale pour les paquets de données à transmettre. La troisième solution consiste à combiner les première et deuxième solutions dans le cadre de la norme RFC 1483b.

Ces solutions permettent effectivement de réduire le poids relatif de l'entête, mais dans le meilleur des cas (qui correspond à la troisième solution), l'entête comporte encore 14 octets, ce qui est toujours trop important pour certaines applications telles que celles précitées.

L'invention a donc pour but de remédier à cet inconvénient.

Elle propose à cet effet un dispositif dédié au traitement de trames de données encapsulées dans un entête de protocole de transmission de niveau deux, au sein d'un réseau de communications comportant une multiplicité de stations de communications comprenant chacune un module d'acheminement de trames couplé à un module de communications de trames.

Ce dispositif se caractérise par le fait qu'il comporte, d'une part, des moyens de mémorisation pouvant stocker des adresses destinataire et/ou des adresses source en correspondance d'adresses destinataire réduites et/ou d'adresses source réduites, et d'autre part, des moyens de traitement capables, lorsqu'un module d'acheminement reçoit une trame, d'extraire de l'entête de cette trame l'adresse destinataire et/ou l'adresse source afin de déterminer dans les moyens de mémorisation l'adresse destinataire réduite et/ou l'adresse source réduite correspondante(s), puis de remplacer dans l'entête chaque adresse précédemment extraite par l'adresse réduite correspondante venant d'être déterminée, et de communiquer au module de communications la trame comportant chaque adresse réduite.

On entend ici par « adresse réduite », une adresse (« logique ») dont la taille en termes d'octets est réduite par rapport à celle de l'adresse normale (ou adresse « physique »). Par exemple, dans le cas du protocole Ethernet de niveau deux, il est possible de réduire la taille de chaque adresse (destination ou source) à 2 octets au lieu de 6. Cela permet donc, lorsque les moyens de traitement sont capables de réduire les tailles des adresses destinataire et source et de supprimer le champ de padding et le champ FCS (ce qui n'est pas obligatoire), d'obtenir un entête (ou overhead) dont la taille est de 6 octets.

Le dispositif de traitement selon l'invention pourra comporter d'autres caractéristiques complémentaires qui pourront être prises séparément et/ou en combinaison, et en particulier :
- des moyens de traitement capables, lorsqu'un module de communications reçoit une trame dont l'une au moins des adresses est réduite, d'extraire de l'entête de cette trame chaque adresse réduite afin de déterminer dans les moyens de mémorisation l'adresse correspondante, puis de remplacer dans l'entête chaque adresse réduite extraite par l'adresse (non réduite) correspondante venant d'être déterminée, et de communiquer au module d'acheminement la trame comportant chaque adresse non réduite déterminée ;
- des moyens de mémorisation alimentés par un équipement du réseau en données d'adresse représentatives, d'une part, des adresses destination et des adresses source, et d'autre part, des adresses destination réduites et des adresses source réduites correspondantes ;
- des moyens de traitement capables de déterminer par auto-apprentissage les adresses destination et source et les adresses destination et source réduites correspondantes. Dans ce cas, lorsqu'un premier module d'acheminement, d'une première station de communications, reçoit une trame-requête (par exemple de type ARP), provenant d'un terminal source et requérant l'obtention de l'adresse destinataire d'un terminal destinataire, inconnue des moyens de mémorisation mais désignée par une adresse destinataire de substitution au format du protocole de transmission, les moyens de traitement sont avantageusement agencés pour extraire de l'entête de cette trame-requête l'adresse destinataire de substitution de manière à la remplacer par une adresse destinataire de substitution réduite, de sorte que le premier module de communications de la première station de communications puisse transmettre la trame-requête réduite à un second module de communications implanté dans une seconde station de communications à laquelle est couplé le terminal destinataire. Ainsi, lorsque le second module de communications reçoit la trame-requête réduite, les moyens de traitement peuvent extraire de son entête l'adresse destinataire de substitution réduite afin de la remplacer par une adresse destinataire de substitution ;
- des moyens de traitement et des moyens de mémorisation implantés dans chaque station de communications ;
- des moyens de traitement, implantés dans la seconde station de communications et qui, lorsque le second module d'acheminement leur a communiqué la trame contenant l'adresse destinataire du terminal destinataire, sont capables d'associer à cette adresse destinataire une adresse destinataire réduite, puis de stocker dans les moyens de mémorisation de la seconde station l'adresse destinataire en correspondance de l'adresse destinataire réduite, de sorte que le second module de communications puisse transmettre au premier module de communications une trame-réponse réduite (par exemple de type ARP) comportant l'adresse destinataire réduite et des données auxiliaires représentatives de l'adresse destinataire. Ainsi, lorsque les moyens de traitement, implantés dans la première station de communications sont en possession de la trame-réponse fournie par le premier module de communications, ils peuvent en extraire l'adresse destinataire réduite et les données auxiliaires, puis stocker dans les moyens de mémorisation de la première station l'adresse destinataire réduite en correspondance de l'adresse destinataire définie par les données auxiliaires, puis communiquer au premier module d'acheminement cette adresse destinataire de sorte qu'il puisse la transmettre au terminal source qui l'avait requise ;
- des moyens de traitement qui, lorsqu'un module d'acheminement reçoit une trame provenant d'un terminal source et comportant une adresse source absente des moyens de mémorisation, sont capables d'extraire l'adresse source de l'entête de cette trame afin de déterminer une adresse source réduite, puis de stocker dans les moyens de mémorisation l'adresse source en correspondance de l'adresse source réduite, et de communiquer la trame munie de cette adresse source réduite au module de communications en vue de sa transmission ;
- des moyens de traitement qui, lorsqu'un module de communications reçoit une trame comportant une adresse source réduite et des données auxiliaires représentatives de cette adresse source, toutes les deux inconnues des moyens de mémorisation, sont capables d'extraire de cette trame l'adresse source et les données auxiliaires, puis de stocker dans les moyens de mémorisation l'adresse source réduite en correspondance de l'adresse source (non réduite) définie par les données auxiliaires, et de communiquer la trame munie de cette adresse source non réduite au module d'acheminement ;
- des moyens de traitement agencés pour associer à une adresse reçue au format du protocole de transmission une adresse réduite choisie dans une liste d'adresses réduites. Dans ce cas, la liste d'adresses réduites peut être implantée dans la mémoire de la station de communications dans laquelle sont implantés les moyens de traitement, les listes différant alors d'une station à l'autre. En variante, la liste d'adresses réduites peut être implantée dans une mémoire d'un serveur du réseau. Les moyens de traitement sont alors agencés pour requérir du serveur une adresse réduite chaque fois qu'une association est requise. Dans une autre variante, une première partie de la liste d'adresses réduites peut être implantée dans une mémoire du dispositif (ou de la station de communications dans laquelle sont implantés les moyens de traitement), les adresses réduites des premières parties différant d'une station à l'autre, et une seconde partie de la liste d'adresses réduites peut être implantée dans une seconde mémoire d'un serveur du réseau. Les moyens de traitement sont alors agencés pour déterminer une adresse réduite dans la première mémoire ou requérir du serveur une adresse réduite stockée dans la seconde mémoire chaque fois qu'une association est requise.

L'invention porte également sur une station de communications, par exemple un terminal de satellite, équipée d'un dispositif du type de celui présenté ci-avant, ainsi que sur un réseau de communications équipé de telles stations de communications.

D'autres caractéristiques et avantages de l'invention apparaîtront à l'examen de la description détaillée ci-après, et des dessins annexés, sur lesquels :
- la figure 1 illustre de façon schématique une trame de données encapsulées dans un entête ethernet standard,
- la figure 2 illustre de façon schématique une partie d'un réseau de communications équipé de dispositifs de traitement selon l'invention,
- la figure 3 illustre de façon schématique une trame de données encapsulées dans un entête ethernet réduit selon l'invention, et
- la figure 4 illustre de façon schématique la structure d'un message de type ARP.

Les dessins annexés pourront non seulement servir à compléter l'invention, mais aussi contribuer à sa définition, le cas échéant.

Sur la figure 2 se trouve illustré, à titre d'exemple, un réseau de communications de type satellitaire. Mais, bien entendu, l'invention n'est pas limitée à ce type de réseau. Elle concerne tous les types de réseau de communications, et notamment les réseaux câblés, les réseaux radio terrestre fixes ou mobiles, et l'ADSL.

Ce réseau de communications satellitaire comprend, de façon très schématique, une multiplicité de stations de communications STi (ici i = 1 et 2, mais il peut prendre toute autre valeur supérieure à deux) raccordées à des terminaux de communications UEj-k (ici j = 1 et 2, et k = 1 et 2, mais ils peuvent prendre toute autre valeur supérieure ou inférieure à deux) et couplées entre-elles par au moins un satellite de communications SAT.

Dans l'exemple illustré, les terminaux de communications sont des équipements d'utilisateurs UE1-k et UE2-k, tels que des ordinateurs fixes ou portables, respectivement raccordés, par exemple, à des routeurs R1 et R2 de réseaux privés, tels que des LANs (ou « Local Area Networks »). Mais, il pourrait s'agir de tout type de terminal de communications capable d'échanger des données avec d'autres terminaux ou équipements de réseau, comme par exemple des téléphones mobiles ou fixes, des télécopieurs, des assistants numériques personnels (ou PDA pour « Personal Digital Assistant »), ou des serveurs de fournisseurs de contenus (ou ASP pour « Application Service Provider »).

Par ailleurs, les terminaux de communications ne sont pas forcément raccordés à un réseau privé ou public, quel qu'en soit le type. Ils peuvent en effet être couplés à l'une des stations de communications STi du réseau, directement, par exemple par un bus, ou indirectement, par exemple via un hub. Mais, dans ce cas, ils doivent être équipés de manière à pouvoir échanger des trames de données encapsulées selon le protocole de transmission, de niveau deux selon le modèle en couches OSI, utilisé par la station de communications STi à laquelle ils sont couplés.

En outre, on considère dans ce qui suit que les stations de communications STi sont des terminaux de satellite agencés de manière à échanger des trames de données encapsulées selon le protocole de transmission Ethernet. Mais, bien entendu, l'invention n'est pas limitée à ce seul protocole de transmission de niveau deux selon le modèle en couches OSI. D'une manière générale, l'invention s'applique à tous les types de protocole de niveau deux, et notamment aux protocoles 802.4, 802.5 et 802.11.

Chaque terminal de satellite STi comprend un module de communications Ci chargé de la transmission des trames sur l'interface air du réseau satellitaire, et couplé à un module d'acheminement Ai, également appelé module de « pontage » du fait qu'étant chargé de ne traiter que le protocole de transmission Ethernet (de niveau deux) il se contente d'assurer une fonction de commutation du trafic en fonction des adresses physiques ethernet contenues dans les trames reçues par le module de communications Ci de l'un des satellites SAT du réseau ou dans les trames qu'il a reçues de l'un des routeurs Rj (dans cet exemple) des réseaux privés LANs. Ces modules d'acheminement Ai et de communications Ci étant bien connus de l'homme de l'art, il ne seront pas décrits ici en détail. Il est simplement rappelé que le module de pontage Ai, qui est défini par la norme 802.1 d, est chargé de déterminer comment acheminer (ou « forward ») des trames vers leurs destinations respectives, et qu'il dispose pour ce faire d'une table d'acheminement habituellement renseignée par apprentissage, comme cela est défini dans la norme IEEE 802.1d.

L'invention propose un dispositif de traitement Di chargé de réduire la taille de l'entête, ici ethernet, d'une trame de données encapsulées et plus précisément de l'une au moins des adresses physiques ethernet, destinataire et source, qu'elle contient.

Préférentiellement, comme illustré sur la figure 2, on implante un dispositif Di dans chaque station de communications STi du réseau.

Dans l'exemple illustré, chaque dispositif Di est couplé aux modules d'acheminement Ai et de communications Ci du terminal de satellite STi dans lequel il est implanté. Mais, en variante, chaque dispositif Di pourrait être directement implanté dans un module de communications Ci ou, plus préférentiellement, dans un module d'acheminement Ai.

Chaque dispositif Di selon l'invention comprend un module de traitement Pi chargé, chaque fois que le module d'acheminement Ai, auquel il est couplé, reçoit une trame, d'extraire de l'entête de cette trame l'adresse physique ethernet destinataire (PA-DEST) et/ou l'adresse physique ethernet source (PA-SOUR) afin de déterminer dans une mémoire Mi une adresse logique ethernet destinataire réduite (LA-DEST) et/ou une adresse logique ethernet source réduite (LA-SOUR) correspondante(s), puis de remplacer dans l'entête chaque adresse physique ethernet précédemment extraite par l'adresse logique ethernet réduite correspondante, venant d'être déterminée.

Préférentiellement, chaque dispositif Di est pourvu d'une mémoire Mi qui lui est propre.

Chaque mémoire Mi est destinée à stocker, par exemple sous la forme d'une table de correspondance, des adresses physiques ethernet destinataire (PA-DEST) et/ou des adresses physiques ethernet source (PA-SOUR) en correspondance d'adresses logiques ethernet destinataire réduites (LA-DEST) et/ou d'adresses logiques ethernet source réduites (LA-SOUR).

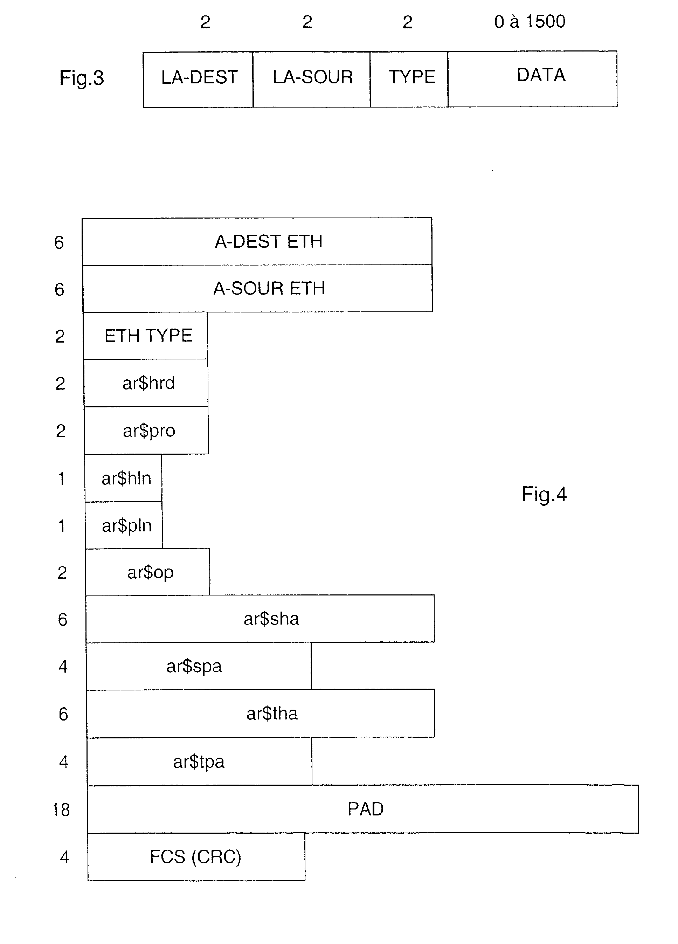

Une adresse logique ethernet réduite est une adresse ethernet dont la taille en termes d'octets est réduite par rapport à celle de l'adresse physique ethernet standard illustrée sur la figure 1. Par exemple, dans le cas du protocole Ethernet, et comme illustré sur la figure 3, il est possible de réduire la taille de chaque adresse physique destination (PA-DEST) ou source (PA-SOUR) à 2 octets au lieu de 6 par une conversion en une adresse logique destination (LA-DEST) ou source (LA-SOUR).

Dans l'exemple illustré sur la figure 3, la trame ethernet est réduite à son maximum dans la mesure où, d'une part, ses adresses physiques ethernet sont réduites grâce à l'invention, et d'autre part, son champ de remplissage PAD (ou « padding ») et son champ de contrôle d'erreur FCS ont été supprimés, conformément à la norme RFC 1483b. Il est préférable que la suppression des champs PAD et RFC soit effectuée par le module de traitement Pi du dispositif Di. Mais cela n'est pas obligatoire, dans la mesure où cela peut également être effectué par le module d'acheminement Ai du terminal de satellite STi.

Dans ce qui suit, on considère que chaque module de traitement Pi est agencé de manière à convertir à la fois l'adresse physique destinataire et l'adresse physique source de chaque trame en adresses logiques réduites destinataire et source, et réciproquement. Mais, bien entendu, l'invention s'applique également aux variantes dans lesquelles chaque module de traitement Pi est agencé de manière à convertir soit uniquement l'adresse physique destinataire d'une trame en une adresse logique réduite destinataire, soit uniquement l'adresse physique source d'une trame en une adresse logique réduite source, et réciproquement.

L'alimentation de la mémoire Mi en données définissant des adresses physiques et logiques s'effectue préférentiellement par auto-apprentissage à l'aide des informations contenues dans les trames reçues, comme décrit ci-après.

Dans l'exemple d'utilisation des dispositifs Di au sein d'un réseau satellitaire, qui va être décrit ci-dessous, on considère que l'équipement d'utilisateur UE1-1, dit équipement source, raccordé au routeur ethernet R1, lui-même raccordé au terminal de satellite ST1, souhaite transmettre des datagrammes IP (de type VoIP) à l'équipement d'utilisateur UE2-2, dit équipement destinataire, raccordé au routeur ethernet R2, lui-même raccordé au terminal de satellite ST2.

L'équipement source UE1-1 ne connaissant que l'adresse IP de l'équipement destinataire UE2-2, par exemple « 194.10.6.5», il doit transmettre à son routeur R1 les données utiles et l'adresse IP connue. Le routeur R1 ne connaissant pas l'adresse ethernet correspondant à l'adresse IP reçue, il doit par conséquent adresser au terminal satellite ST1 une trame-requête au format ethernet pour requérir l'adresse physique ethernet de l'équipement destinataire UE2-2 qui correspond à son adresse IP 194.10.6.5. En fait, dans cet exemple, les routeurs R1 et R2 étant des routeurs périphériques (ou « edge routers »), ce qui n'est pas obligatoire, le routeur R1 sait, grâce à sa table de routage, que pour atteindre l'équipement dont l'adresse IP est 194.10.6.5, il n'a qu'à atteindre le routeur R2 auquel ledit équipement est raccordé. Par conséquent, la trame-requête a pour objet d'obtenir l'adresse physique ethernet du routeur R2 et non l'adresse de l'équipement destinataire. On considère donc dans ce qui suit que PA-DEST est l'adresse physique ethernet du routeur R2.

Préférentiellement, la trame-requête est de type ARP (pour « Address Resolution Protocol »), comme illustré sur la figure 4.

Il est ici rappelé qu'une requête ARP est envoyée en mode de diffusion (ou « broadcast »), ce qui veut dire que l'adresse physique ethernet destinataire est remplacée par des données définissant une adresse broadcast, par exemple de type « FFFFFFFFFFFF hex ».

A réception de la trame-requête ARP, le terminal de satellite ST1 la communique à son module d'acheminement Ai de sorte qu'il assure sa fonction de pontage (ou « bridge »). Le module d'acheminement A1 stocke ensuite dans sa table de forwarding l'adresse physique ethernet source PA-SOUR, s'il ne la connaît pas déjà, puis il transmet la trame-requête au module de traitement P1 du dispositif D1 afin qu'il en extraie l'entête, puis qu'il vérifie dans la mémoire M1 si elle stocke l'adresse physique ethernet source PA-SOUR. Dans cet exemple, ce n'est pas le cas. Par conséquent, le module de traitement P1 détermine une adresse logique ethernet réduite LA-SOUR, puis stocke dans la mémoire M1 l'adresse physique PA-SOUR en correspondance de l'adresse logique réduite LA-SOUR. On reviendra plus loin sur le mode de détermination d'une adresse logique.

Puis, le module de traitement P1 convertit l'adresse broadcast physique (destinataire) en une adresse broadcast logique réduite, par exemple de type « FFFF hex », et communique au module de communications C1 la trame munie de l'entête réduit comprenant LA-SOUR et FFFF hex. La trame-requête ARP devant être diffusée, le module de communications C1 est donc chargé de la diffuser vers tous les autres interfaces, et notamment l'interface satellite. Le satellite SAT diffuse ensuite la trame-requête, notamment, vers le terminal de satellite ST2, lequel, du fait qu'il s'agit d'une trame ethernet diffusée doit la communiquer, notamment, au routeur ethernet R2. Mais, avant cela, le terminal de satellite ST2 doit tout d'abord convertir les adresses logiques réduites ethernet en adresses physiques ethernet.

Cette opération de conversion est confiée au module de traitement P2. Plus précisément, à réception de la trame-requête ARP réduite, par le module de communications C2 du terminal de satellite ST2, le module de traitement P2 du dispositif D2 en extrait l'entête. Puis, le module de traitement P2 convertit l'adresse broadcast logique réduite FFFF hex en l'adresse broadcast physique FFFFFFFFFFFF hex. Il doit ensuite déterminer l'adresse source PA-SOUR qui correspond à l'adresse source réduite LA-SOUR reçue. Pour ce faire, le module de traitement P2 tire avantageusement partie des informations traditionnellement contenues dans une trame-requête ARP.

En effet, parmi les 14 champs d'une trame-requête ARP, l'un d'entre-eux « ar$sha » (pour « source hardware adress ») contient l'adresse physique ethernet source.

Le module de traitement P2 peut alors stocker dans la mémoire M2 l'adresse physique PA-SOUR en correspondance de l'adresse logique réduite LA-SOUR, puis communiquer au module de communications C2 l'entête comprenant PA-SOUR et FFFFFFFFFFFF hex. Le module de communications C2 transmet alors au module d'acheminement A2 la trame non réduite, de sorte qu'il stocke dans sa table de forwarding l'adresse physique ethernet source PA-SOUR (de l'interface satellite), puis qu'il transmette la trame-requête ARP contenant l'entête non réduit au routeur ethernet R2.

En réponse à cette trame-requête ARP, le routeur R2 génère une trame-réponse ARP contenant son adresse PA-SOUR (qui est en fait l'adresse PA-DEST requise dans la trame-requête) et l'adresse PA-DEST (qui est en fait l'adresse PA-SOUR qui était contenue dans la trame-requête) et la transmet au terminal de satellite ST2.

A réception de la trame-réponse ARP, le terminal de satellite ST2 la communique à son module d'acheminement Ai de sorte qu'il assure sa fonction de pontage (ou « bridge »), puis qu'il stocke dans sa table de forwarding l'adresse physique ethernet source PA-SOUR qu'elle contient, s'il ne la connaît pas déjà, et qu'il transmette la trame-réponse au module de traitement P2. Le module de traitement P2 du dispositif D2 peut alors extraire l'entête de cette trame, puis vérifier dans la mémoire M2 si elle stocke l'adresse PA-SOUR. Dans cet exemple, ce n'est pas le cas. Par conséquent, le module de traitement P2 détermine une adresse logique ethernet réduite LA-SOUR puis stocke PA-SOUR dans la mémoire M2 en correspondance de LA-SOUR. Sensiblement dans le même temps, le module de traitement P2 détermine dans la mémoire M2 l'adresse logique réduite LA-DEST qui correspond à l'adresse physique ethernet PA-DEST.

Puis, le module de traitement P2 communique au module de communications C2 la trame munie de l'entête réduit comprenant LA-SOUR et LA-DEST, de sorte qu'il la transmette au satellite SAT pour qu'il la retransmette au terminal de satellite ST1.

A réception de cette trame-réponse ARP réduite, par le module de communications C1 du terminal de satellite ST1, le module de traitement P1 du dispositif D1 en extrait l'entête. Le module de traitement P1 vérifie alors dans la mémoire M1 si elle stocke les adresses logiques réduites LA-DEST et LA-SOUR. Dans cet exemple, seule l'adresse source LA-DEST (qui est en fait l'adresse source qui était contenue dans la trame-requête) est stockée en correspondance de l'adresse physique PA-DEST. Par conséquent, le module de traitement P1 doit déterminer l'adresse physique source PA-SOUR qui correspond à l'adresse logique réduite source reçue LA-SOUR.

Pour ce faire, le module de traitement P1 tire avantageusement partie des informations traditionnellement contenues dans une trame-réponse ARP. En effet, parmi les 14 champs d'une trame-réponse ARP, ar$sha contient, comme indiqué précédemment, l'adresse physique ethernet source.

Le module de traitement P1 peut alors stocker dans la mémoire M1 l'adresse physique PA-SOUR en correspondance de l'adresse logique réduite LA-SOUR, puis communiquer au module de communications C1 l'entête non réduit comprenant PA-SOUR et PA-DEST. Le module de communications C1 transmet alors la trame-réponse non réduite au module d'acheminement Ai de sorte qu'il stocke dans sa table de forwarding l'adresse physique ethernet source PA-SOUR (de l'interface satellite), puis qu'il transmette la trame-réponse ARP contenant l'entête non réduit au routeur R1. Ce dernier disposant désormais de l'adresse physique du routeur R2 peut alors générer des trames ethernet comportant, d'une part, les donnés utiles à transmettre au routeur R2 et destinées à l'équipement destinataire UE2-2, et d'autre part, les adresses physiques ethernet source PA-SOUR et destinataire PA-DEST.

Ces trames sont transmises au terminal de satellite ST1. Le traitement des trames destinées à l'équipement destinataire UE2-2 par les modules de traitement P1 et P2 des terminaux satellites ST1 et ST2 est alors notablement simplifié puisqu'ils disposent désormais chacun, dans les mémoires M1 et M2 des adresses physiques ethernet destinataire PA-DEST et source PA-SOUR ainsi que des adresses logiques ethernet réduites destinataire LA-DEST et source LA-SOUR.

A réception de la trame ethernet, le terminal de satellite ST1 la communique à son module d'acheminement Ai de sorte qu'il assure sa fonction de pontage (ou « bridge »), puis qu'il transmette la trame au module de traitement P1. Le module de traitement P1 du dispositif D1 peut alors extraire l'entête de cette trame, puis vérifier dans la mémoire M1 si elle stocke les adresses physiques ethernet PA-SOUR et PA-DEST. Dans cet exemple, tel est le cas. Par conséquent, il extrait de la mémoire M1 les adresses logiques ethernet réduites LA-SOUR et LA-DEST.

Puis, le module de traitement P1 communique au module de communications C1 la trame munie de l'entête réduit comprenant LA-SOUR et LA-DEST, de sorte qu'il la transmette au satellite SAT pour qu'il la retransmette au terminal de satellite ST2.

A réception de la trame réduite, par le module de communications C2 du terminal de satellite ST2, le module de traitement P2 du dispositif D2 en extrait l'entête. Puis, le module de traitement P2 extrait de la mémoire M2 les adresses physiques ethernet source PA-SOUR et destinataire PA-DEST qui correspondent aux adresses logiques ethernet réduites LA-SOUR et LA-DEST reçues.

Le module de traitement P2 peut alors communiquer au module d'acheminement A2 la trame munie de l'entête non réduit comprenant PA-SOUR et PA-DEST. Le module d'acheminement A2 peut ensuite transmettre la trame contenant l'entête non réduit au routeur ethernet R2 qui, du fait qu'il connaît l'adresse IP correspondant à l'adresse physique ethernet PA-DEST, peut communiquer les données utiles (sans entête ethernet) à l'équipement destinataire UE2-2 désigné par cette adresse IP.

Au moins trois possibilités peuvent être envisagées pour le choix d'une adresse logique réduite.

Une première possibilité consiste à stocker dans une mémoire de chaque dispositif Di, par exemple dans une partie de Mi comme illustré sur la figure 2 (mais il pourrait s'agir d'une mémoire totalement distincte), une liste d'adresses logiques réduites. Dans ce cas, chaque terminal de satellite STi dispose de sa propre liste d'adresses de manière à éviter tout doublon. Par ailleurs, le module de traitement Pi est agencé de manière à déterminer dans la liste de la mémoire (Mi) une adresse logique réduite chaque fois qu'il souhaite effectuer une association (ou conversion).

Une deuxième possibilité consiste à stocker la liste d'adresses logiques réduites dans une mémoire d'un serveur du réseau, comme par exemple dans le serveur NCC. Dans ce cas, le module de traitement Pi est agencé de manière à requérir du serveur NCC une adresse logique réduite chaque fois qu'il souhaite effectuer une association (ou conversion).

Une troisième possibilité consiste à stocker une première partie de la liste d'adresses logiques réduites dans une mémoire de chaque dispositif Di, par exemple dans une partie de Mi, et une seconde partie de la liste d'adresses logiques réduites dans une mémoire d'un serveur du réseau, comme par exemple dans le serveur NCC. Dans ce cas, le module de traitement Pi est agencé de manière à déterminer une adresse logique réduite dans la mémoire Mi, ou à requérir du serveur NCC une adresse logique réduite, chaque fois qu'il souhaite effectuer une association (ou conversion).

La première possibilité est particulièrement intéressante dans la mesure où elle ne requiert pas de signalisation particulière pour l'alimentation du dispositif en adresses logiques réduites.

Le nombre d'adresses logiques réduites allouées à chaque station de communications STi est préférentiellement fixé en fonction de ses besoins. En effet, les besoins peuvent différer largement en fonction du nombre de routeurs de type périphérique (ou « edge router ») qui sont raccordés à une station de communications. Dans ce cas particulier, une unique adresse permet effectivement d'adresser tous les équipements (ou terminaux) qui font partie du réseau auquel appartient le routeur périphérique.

Le dispositif de traitement D, et principalement son module de traitement P, ainsi qu'éventuellement sa mémoire M, peuvent être réalisés sous la forme de circuits électroniques, de modules logiciels (ou informatiques), ou d'une combinaison de circuits et de logiciels.

Grâce à l'invention, il est possible d'améliorer très notablement l'efficacité d'utilisation des ressources d'un réseau, en particulier lorsqu'il est de type satellitaire. Ainsi, dans le cas d'une encapsulation de type AAL5/ATM de données de type VolP (dans laquelle les champs de padding et de contrôle d'erreur FCS sont supprimés), il a été observé un gain d'environ 100%. Cela résulte notamment de la suppression de ce que l'homme de l'art appelle « l'effet de pallier dans la segmentation ATM ». Par exemple, un échantillon de voix de 20 octets peut être transmis à l'aide d'une unique cellule ATM grâce à l'invention, alors qu'il faudrait deux cellules ATM pour la transmettre dans un réseau traditionnel, dépourvu de dispositifs selon l'invention.

L'invention ne se limite pas aux modes de réalisation de réseau, de station de communications et de dispositif de traitement décrits ci-avant, seulement à titre d'exemple, mais elle englobe toutes les variantes que pourra envisager l'homme de l'art dans le cadre des revendications ci-après.

Ainsi, dans ce qui précède il a été décrit un réseau dans lequel chaque station de communications était équipée d'un dispositif de traitement selon l'invention. Mais, on peut envisager une variante dans laquelle le réseau n'est pourvu que d'un unique dispositif de traitement central, interrogé par chaque station de communications lorsqu'elle souhaite transmettre une trame réduite.

Par ailleurs, on a décrit une application au protocole de transmission de niveau deux Ethernet. Mais l'invention peut être utilisée avec d'autres protocoles de transmission de niveau deux, et notamment les protocoles 802.4, 802.5 et 802.11.

En outre, dans ce qui précède il a été décrit une application de l'invention aux réseaux de communications de type satellitaire. Mais l'invention concerne tous les réseaux dans lesquels des stations de communications doivent échanger des trames dans lesquelles les adresses physiques peuvent être converties en adresses logiques réduites, et notamment les réseaux câblés, les réseaux radio terrestre fixes ou mobiles, et l'ADSL.

## Revendications

1. Dispositif de traitement de trames de données encapsulées dans un entête de protocole de transmission de niveau deux, pour un réseau de communications comportant des stations de communications (STi) comprenant chacune un module d'acheminement de trames (Ai) couplé à un module de communications (Ci) de trames, chaque entête comprenant au moins une adresse destinataire et une adresse source, **caractérisé en ce qu'**il comprend des moyens de mémorisation (Mi) propres à stocker des adresses destinataire et/ou source en correspondance d'adresses destinataire et/ou source réduites, et des moyens de traitement (Pi) agencés, en cas de réception d'une trame par un module d'acheminement (Ai), i) pour extraire de l'entête de cette trame ladite adresse destinataire et/ou ladite adresse source de manière à déterminer dans lesdits moyens de mémorisation (Mi) l'adresse destinataire réduite et/ou l'adresse source réduite correspondante(s), puis ii) pour remplacer dans ledit entête chaque adresse extraite par l'adresse réduite correspondante précédemment déterminée, et iii) pour communiquer au module de communications (Ci) ladite trame comportant chaque adresse réduite.

2. Dispositif selon la revendication 1, **caractérisé en ce que** lesdits moyens de traitement (Pi) sont agencés pour extraire de chaque entête lesdites adresses destinataire et source en vue de les remplacer par des adresses destinataire et source réduites.

3. Dispositif selon l'une des revendications 1 et 2, **caractérisé en ce que** lesdits moyens de traitement (Pi) sont agencés, en cas de réception par un module de communications (Ci) d'une trame à adresse(s) réduite(s), i) pour extraire de l'entête de cette trame chaque adresse réduite de manière à déterminer dans lesdits moyens de mémorisation (Mi) l'adresse correspondante, puis ii) pour remplacer dans ledit entête chaque adresse réduite extraite par l'adresse correspondante précédemment déterminée, et iii) pour communiquer au module d'acheminement (Ai) ladite trame comportant chaque adresse non réduite déterminée.

4. Dispositif selon l'une des revendications 1 à 3, **caractérisé en ce que** lesdits moyens de mémorisation (Mi) sont alimentés par un équipement (NCC) dudit réseau en données d'adresse représentatives des adresses destination et source et des adresses destination et source réduites correspondantes.

5. Dispositif selon l'une des revendications 1 à 3, **caractérisé en ce que** lesdits moyens de traitement (Pi) sont agencés pour déterminer par auto-apprentissage des adresses destination et source et des adresses destination et source réduites correspondantes.

6. Dispositif selon la revendication 5, **caractérisé en ce qu'**en cas de réception par un premier module d'acheminement (A1), d'une première station de communications (ST1), d'une trame-requête provenant d'un terminal source (UE1-1) et requérant l'obtention d'une adresse destinataire, désignant un terminal destinataire (UE2-2) et absente desdits moyens de mémorisation (M1), et comportant une adresse destinataire de substitution au format dudit protocole de transmission, lesdits moyens de traitement (Pi) sont agencés i) pour extraire de l'entête de cette trame-requête ladite adresse destinataire de substitution de manière à la remplacer par une adresse destinataire de substitution réduite, de sorte que le premier module de communications (C1) de ladite première station de communications (ST1) transmette ladite trame réduite à un second module de communications (C2) implanté dans une seconde station de communications (ST2) à laquelle est couplé ledit terminal destinataire (UE2-2).

7. Dispositif selon la revendication 6, **caractérisé en ce qu'**à réception de ladite trame-requête réduite par ledit second module de communications (C2), lesdits moyens de traitement (P2) sont agencés pour extraire de l'entête de cette trame-requête réduite l'adresse destinataire de substitution réduite de manière à la remplacer par une adresse destinataire de substitution, puis pour communiquer la trame munie de cette adresse destinataire de substitution au second module d'acheminement (A2).

8. Dispositif selon l'une des revendications 1 à 7, **caractérisé en ce que** lesdits moyens de traitement (Pi) et lesdits moyens de mémorisation (Mi) sont implantés dans chaque station de communications (STi).

9. Dispositif selon la combinaison des revendications 7 et 8,
**caractérisé en ce que**, une fois en possession de l'adresse destinataire dudit terminal destinataire (UE2-2) fournie par ledit second module d'acheminement (A2), lesdits moyens de traitement (P2), implantés dans ladite seconde station de communications (ST2), sont agencés pour associer à cette adresse destinataire une adresse destinataire réduite, puis pour stocker dans lesdits moyens de mémorisation (M2) de cette seconde station (ST2) ladite adresse destinataire en correspondance de ladite adresse destinataire réduite, de sorte que ledit second module de communications (C2) transmette audit premier module de communications (C1) une trame-réponse réduite comportant ladite adresse destinataire réduite et des données auxiliaires représentatives de ladite adresse destinataire.

10. Dispositif selon la revendication 9, **caractérisé en ce que**, une fois en possession de ladite trame-réponse fournie par ledit premier module de communications (C1), lesdits moyens de traitement (P1) implantés dans ladite première station de communications (ST1) sont agencés i) pour extraire de cette trame-réponse ladite adresse destinataire réduite et lesdites données auxiliaires, puis ii) pour stocker dans lesdits moyens de mémorisation (M1) de cette première station (ST1) ladite adresse destinataire réduite en correspondance de ladite adresse destinataire définie par lesdites données auxiliaires, et iii) pour communiquer audit premier module d'acheminement (A1) la trame munie de ladite adresse destinataire initialement requise de sorte que ledit premier module d'acheminement (A1 ) puisse transmettre ladite adresse de destination audit terminal source (UE1-1).

11. Dispositif selon l'une des revendications 5 à 10, **caractérisé en ce qu'**en cas de réception par un module d'acheminement (A1) d'une trame provenant d'un terminal source (UE1-1), comportant une adresse source absente desdits moyens de mémorisation (M1), lesdits moyens de traitement (P1) sont agencés pour extraire de l'entête de cette trame ladite adresse source de manière à déterminer une adresse source réduite, puis à stocker dans lesdits moyens de mémorisation (M1) ladite adresse source en correspondance de ladite adresse source réduite, et pour communiquer audit module de communications (Ci) la trame munie de cette adresse source réduite.

12. Dispositif selon la combinaison des revendications 7 et 8, **caractérisé en ce qu'**en cas de réception par un module de communications (Ci) d'une trame comportant une adresse source réduite et des données auxiliaires représentatives de cette adresse source, lesdites adresses source et adresse source réduite étant absentes desdits moyens de mémorisation (Mi), lesdits moyens de traitement (Pi) sont agencés pour extraire de cette trame ladite adresse source et lesdites données auxiliaires, puis pour stocker dans lesdits moyens de mémorisation (Mi) ladite adresse source réduite en correspondance de ladite adresse source définie par lesdites données auxiliaires, et pour communiquer audit module d'acheminement (Ai) la trame munie de cette adresse source.

13. Dispositif selon l'une des revendications 9 à 12, **caractérisé en ce que** lesdits moyens de traitement (Pi) sont agencés pour associer à une adresse reçue au format dudit protocole de transmission une adresse réduite choisie dans une liste d'adresses réduites.

14. Dispositif selon la combinaison des revendications 7 et 13, **caractérisé en ce que** lesdits moyens de mémorisation (Mi), de la station de communications (STi) dans laquelle sont implantés lesdits moyens de traitement (Pi), sont propres à stocker ladite liste d'adresses réduites, lesdites listes différant d'une station (STi) à l'autre.

15. Dispositif selon la revendication 13, **caractérisé en ce que** ladite liste d'adresses réduites est implantée dans une mémoire d'un serveur (NCC) dudit réseau, et **en ce que** lesdits moyens de traitement (Pi) sont agencés, lorsqu'une association est requise, pour requérir dudit serveur (NCC) une adresse réduite.

16. Dispositif selon la combinaison des revendications 7 et 13, **caractérisé en ce que** lesdits moyens de mémorisation (Mi), de la station de communications (STi) dans laquelle sont implantés lesdits moyens de traitement (Pi), sont propres à stocker une première partie de ladite liste d'adresses réduites, les adresses réduites desdites première partie différant d'une station (STi) à l'autre, et une seconde partie de ladite liste d'adresses réduites est implantée dans une seconde mémoire d'un serveur (NCC) dudit réseau, et **en ce que** lesdits moyens de traitement (Pi) sont agencés, lorsqu'une association est requise, pour déterminer une adresse réduite dans lesdits moyens de mémorisation (Mi) ou requérir dudit serveur (NCC) une adresse réduite stockée dans ladite seconde mémoire.

17. Dispositif selon l'une des revendications 1 à 16, **caractérisé en ce que** ledit protocole de transmission de niveau deux est le protocole Ethernet.

18. Dispositif selon la revendication 17, **caractérisé en ce qu'**en présence d'adresses définies par six octets, chaque adresse réduite est définie par deux octets.

19. Dispositif selon l'une des revendications 17 et 18 en combinaison avec l'une des revendications 6 à 16, **caractérisé en ce que** chaque trame-requête et chaque trame-réponse est de type ARP.

20. Dispositif selon l'une des revendications 17 à 19, **caractérisé en ce que** chaque trame possédant un champ de détection d'erreur et un champ de remplissage, lesdits moyens de traitement (Pi) sont agencés, à réception d'une trame à transmettre, pour supprimer de ladite trame l'un au moins desdits champ de détection d'erreur et champ de remplissage.

21. Station de communications, **caractérisée en ce qu'**elle comprend un dispositif (D) selon l'une des revendications précédentes.

22. Station selon la revendication 21, **caractérisée en ce que** chaque dispositif (Di) est implanté dans un module de communications (Ci).

23. Station selon la revendication 21, **caractérisée en ce que** chaque dispositif (Di) est implanté dans un module d'acheminement (Ai).

24. Station selon l'une des revendications 21 à 23, **caractérisée en ce qu'**elle est agencée sous la forme d'un terminal de satellite.

25. Réseau de communications, **caractérisé en ce qu'**il comprend une multiplicité de stations selon l'une des revendications 21 à 24.
